# NEUE EUROPÄISCHE PATENTSCHRIFT

(11) **EP 0 654 201 B2**
(45) Veröffentlichungstag und Bekanntmachung des Hinweises auf die Entscheidung über den Einspruch: **02.01.2003**
(45) Hinweis auf die Patenterteilung: 21.08.1996
(21) Anmeldenummer: 93912827.8
(22) Anmeldetag: 29.05.1993
(51) Int. Cl.: H04Q 7/20, H04B 7/26, H04H 3/00

(54) **VERFAHREN UND VORRICHTUNG FÜR EIN MIKROZELLULARES GLEICHKANALFUNKSYSTEM**
PROCESS AND DEVICE FOR A MICROCELLULAR COMMON-CHANNEL RADIO SYSTEM
PROCEDE ET DISPOSITIF POUR UN SYSTEME RADIO MICROCELLULAIRE A CANAL COMMUN

(30) Priorität: 04.08.1992 DE 4225582
(43) Veröffentlichungstag der Anmeldung: 24.05.1995
(73) Patentinhaber: DETECON DEUTSCHE TELEPOST CONSULTING GmbH, 53175 Bonn (DE)
(72) Erfinder: SCHMIDT, Werner, Co. Roscommon (IE); STAHL, Hans-Joachim, D-5300 Bonn 2 (DE)
(74) Vertreter: Riebling, Peter, Dr.-Ing.
(86) Internationale Anmeldenummer: EP9301354
(87) Internationale Veröffentlichungsnummer: WO94004005

(56) Entgegenhaltungen:
- EP-A- 0 110 009
- EP-A- 0 347 396
- WO-A-93/12586
- DE-A- 3 231 564
- DE-B- 1 230 471
- DE-C- 952 280
- DE-C- 1 011 016
- US-A- 3 646 441
- US-A- 4 209 749
- US-A- 4 932 049
- VEHICULAR TECHNOLOGY SOCIETY 42ND VTS CONFERENCE Bd. 1, 10. Mai 1992, DENVER US Seiten 413 - 418 H.PERSSON 'Microcellular structures and their performance'
- FUNKSCHAU Nr. 13, Juni 1982, M}NCHEN DE Seiten 51 - 54 H.B]RK 'Auf gleicher Frequenz'

## Beschreibung

Die Erfindung betrifft ein Verfahren zur Verbesserung der Funkversorgung einer Verkehrswegestruktur durch ein Mobilfunksystem gemäß dem Oberbegriff des Patentanspruchs 1. Zellulare Mobilfunknetze zeichnen sich dadurch aus, daß die zu versorgende Fläche in Zellen unterteilt ist, wobei jede Zelle durch eine Feststation versorgt wird. Jeder Zelle wird eine Kanalgruppe, bestehend aus mehreren Kanälen, zugeteilt, wobei unter Kanälen Kommunikationskanäle zu verstehen sind, über die Sprach- oder Datenverbindungen mit Mobistationen abgewickelt werden können. Hierbei handelt es sich um Duplex-Funkkanäle für die beiden Übertragungsrichtungen. Unter dem Begriff Mobilstation werden alle Arten von Teilnehmergeräten zusammengefaßt. Um eine hohe Teilnehmerkapazität zu erzielen, werden die Kanalgruppen in gewissem Abstand in der Fläche für unterschiedliche Verbindungen wiederbenutzt, wobei darauf zu achten ist, daß es nicht zu Gleichkanal-Interferenzen und dadurch zu gegenseitigen Störungen kommt.

Wechselt eine Mobilstation während der Funkverbindung von einer Zelle in die Nachbarzelle, findet ein Handover statt, wobei das System eine Übergabeprozedur vornehmen muß. In den bisherigen Netzen findet beim Handover-Prozeß sowohl eine Umschaltung der Verbindung von einer Feststation zu einer anderen Feststation als auch der Wechsel von dem Funkkanal der Zelle, die verlassen wird, zu dem Funkkanal der Nachbarzelle statt. Dadurch kann es häufig zu unerwünschten Mehrfachumschaltungen an den Zellgrenzen kommen, die nicht selten einen Verbindungsabbruch nach sich ziehen.

Normalerweise haben die einzelnen Zellen eine hexagonale oder quadratische Struktur, wobei die Zellstrukturen so angeordnet sind, daß die gesamt zu versorgende Fläche gleichmäßig ausgeleuchtet wird. Aus der US-A- 4 932 049 ist eine Vorrichtung zur Funkzellenausleuchtung bei einem zellularen Mobilfunksystem bekannt geworden, welches aus einer oder mehreren jeweils ein Cluster bildenden Zellen besteht. Im Randbereich jeder Zelle ist jeweils mindestens eine Feststation angeordnet, welche mindestens eine Sektorantenne aufweist die einen Bereich dieser Zelle mit einer Kanalgruppe überstreicht. Dabei ist es vorgesehen, daß jeder Feststation mehrere Sektorantennen zugeordnet sind, wobei jede Sektorantenne in Richtung auf das Zentrum der jeweils zu versorgenden Zelle zeigt.

Je nach Position der Mobilstation in der Zelle schalten die Feststationen gegenseitig um und senden somit nie gleichzeitig in die Zelle hinein. In dieser Zellenstruktur sendet jede der Zelle zugeordnete Feststation nur in ihre eigene Zelle hinein. Diese Zellstrukturen lassen sich jedoch nicht in jedem Fall auf ökonomisch dichtbesiedelte Stadtzonen mit annähernd gleich verteilten Verkehrsaufkommen anwenden, da sie sich nicht an die städtebaulichen Gesichtspunkte (z. B. Häuserzeilen an parallel verlaufenden Straßen) optimal anpassen. Außerdem kann es an den Kreuzungspunkten der Verkehrswege bei Fahrtrichtungswechsel zu Gesprächsabbrüchen kommen, da jeder Verkehrsweg mit einer unterschiedlichen Frequenz ausgeleuchtet wird und daher an den Kreuzungen bei Fahrtrichtungswechsel eine gewisse Feldstärke nicht mehr aufrecht erhalten und ein Handover nicht in der erforderlichen Zeit abgewickelt werden kann.

In Ballungsgebieten treten aufgrund der begrenzten Verfügbarkeit von Frequenzressourcen außerdem Kapazitätsprobleme bei Mobilkommunikationssystemen auf. Daher werden zunehmend Mikrozellen mit Versorgungsreichweiten von wenigen hundert Metern eingesetzt, die sich durch eine geringe Sendeleistung und eine niedrig angebrachte Antenne der Feststation auszeichnen. Die dadurch erreichten kleineren absoluten Interferenzentfernungen lassen sich in ausgedehnten Mikrozellengebieten in höhere Kapazität umsetzen.

Dieses Verfahren weist jedoch einige Nachteile auf. Die Funkzellen sind sehr unregelmäßig geformt und haben eine stark streuende Feldstärkenverteilung. Zur Einhaltung eines Mindeststörabstandes sind mehr Frequenzgruppen mit den sich daraus ergebenden größeren Clustern erforderlich. Dadurch ergibt sich ein unterproportionaler Kapazitätszuwachs. Es entsteht eine überproportionale Erhöhung der Systemlast, da es zu Mehrfach-Handovers kommt. Außerdem sind die Handover-Prozesse orts- und zeitkritisch, insbesondere im Bereich der Straßenkreuzungen, wo an Bebauungskanten Feldstärkeeinbrüche von 20 dB und mehr auftreten die sehr oft einen Verbindungsabbruch herbeiführen.

Der Erfindung liegt deshalb die Aufgabe zugrunde, ein Verfahren aufzuzeigen, das eine verbesserte Funkzellenausleuchtung für ökonomisch dicht besiedelte Stadtgebiete mit annähernd gleich verteiltem Verkehrsaufkommen gewährleistet. Dabei soll auch sichergestellt werden, daß an kritischen Punkten wie z. B. Straßenkreuzungen eine gesicherte Funkverbindung aufrecht erhalten werden kann und der Handover-Prozeß bei Zellwechsel störungsfrei bleibt.

Die Aufgabe wird durch die in den unabhängigen Patentansprüchen angegebene Merkmale gelöst. Das erfindungsgemäße Verfahren basiert auf einer Funknetzstruktur, die speziell auf die Versorgung linienförmiger Verkehrswege mit oder ohne Kreuzungen ausgelegt ist, und in der Randausleuchtung der Zellen von mehreren Antennenstandertem, wobei alle Standorte, die die gleiche Zelle versorgen, auch dieselbe Frequenz benutzen. Vorteilhafte Ausgestaltungen der Erfindung sind in den Unteransprüchen angegeben. So kann man gezielt eine adaptive Leistungszuteilung zwischen den an einer Verbindung beteiligten Standorten einsetzen. Empfangsseitig läßt sich vorteilhaft ein Diversity-Combining ausnutzen. Ein Vorteil der Erfindung ist, daß der Handover-Prozeß mit Frequenzwechsel sich auf die Gebiete beschränkt, die gleich gut von der Herkunftszelle als auch von der Zielzelle versorgt werden.

In einer solchen Netzstruktur gibt es also zwei Formen des Handover. Die eine Form ist das implizite oder "weiche" Handover, das durch die adaptive Leistungszuweisung auf der Festseite entsteht, ohne daß die MS es als solches erkennt und das in den Kreuzungsbereichen stattfindet. Es geschieht durch den fließenden Übergang zwischen den an der Funkverbindung beteiligten Standorten, die eine Zelle mit derselben Kanalgruppe versorgen. Bei diesem Vorgang sind immer mindestens zwei Feststationen an der Verbindung beteiligt. Es kommt zu keinem Kanalwechsel. Vorteilhaft ist hierbei, daß es im Kreuzungsbereich bei Richtungswechseln keine zeitkritischen Handover-Prozeduren mit Kanalwechseln gibt.

Die zweite Form des Handover ist die allgemein bekannte Form, wobei hier ein Kanalwechsel stattfindet und der Prozeß im Überlappungsbereich von zwei Zellen abläuft. Der überlappungsbereich ist der Bereich der annähernd rundstrahlenden Antenne um einen Festsenderstandort. In diesem Bereichen wird die MS in der Regel auf sowohl dem alten als auch dem neuen Kanal gleich gut versorgt. Dieses Handover ist weder ortsnoch zeitkritisch.

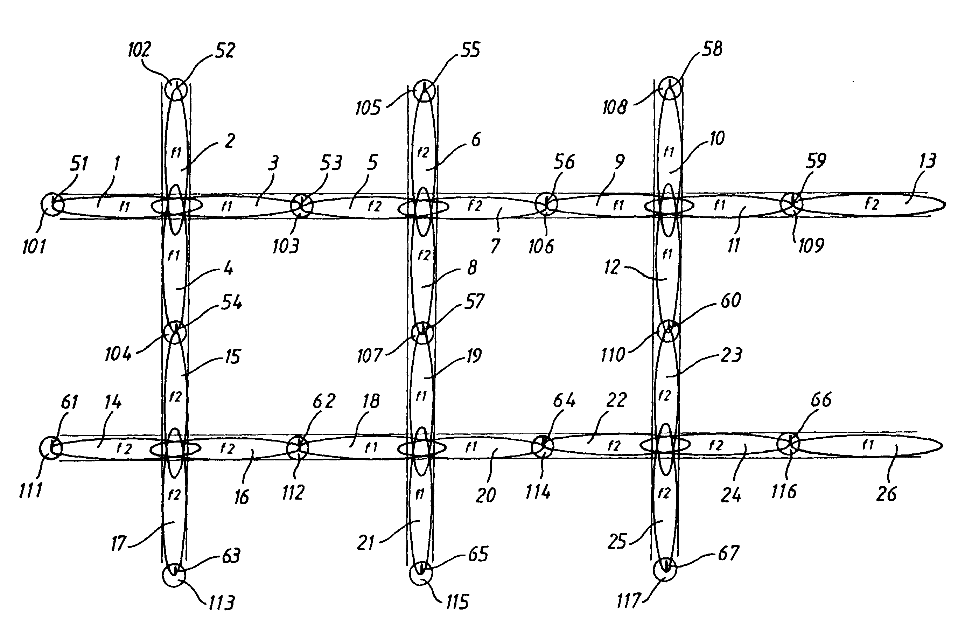

Ein Beispiel des erfindungsgemäßen Verfahrens wird im folgenden anhand der Figur 1 näher erläutert. Abweichend von den üblichen hexagonalen oder quadratischen Formen haben die Zellen in einer linienförmigen Verkehrswegestruktur eine sternförmige Struktur, die sich aus sich gegenseitig überlappenden, ellipsenförmigen Teilflächen (1 - 26) zusammensetzt. Mehrere gleichartige Zellen verbinden sich zu einer netzartigen Struktur, wobei die Zellen abwechselnd mit zwei unterschiedlichen Kanalgruppen, f1 und f2, ausgeleuchtet werden. Auf diese Weise kann dieselbe Frequenz bei jeder zweiten Zelle wiederholt werden.

Feststationen (51 - 67) befinden sich im Übergangsbereich zwischen jeweils zwei Zellen. Es sind dort zwei in entgegengesetzter Richtung strahlende Richtantennen angeordnet, deren Versorgungsbereiche die ellipsenförmigen Flächen sind, sowie eine annäherungsweise rundstrahlende Antenne, die den unmittelbaren Nahbereich (101 - 117) des Standortes versorgt. Die jeweils einander zugewandten Sektoren benachbarter Standorte einer Zelle versorgen den so entstehenden Bereich mit derselben Frequenz. An einer Verbindung sind also bei einer linienförmigen Versorgung bis zu zwei - im Bereich von Kreuzungen bis zu vier - Standorte beteiligt. Eine Mobilstation erhält also auf dem ihr zugewiesenen Kanal in der Regel von mehreren Standorten dasselbe Signal auf derselben Frequenz. Um dies zu erreichen, werden die einer Zelle zugeordneten Sender miteinander synchronisiert, damit es nicht zu Verzerrungen im Empfänger der Mobilstation durch Intersymbol-Interferenz kommt. Weiterhin werden auf der Festseite die Leistungsanteile der beteiligten Standorte so eingestellt, daß einerseits das Summensignal am Empfängereingang, ein vorgegebenes S/I-Verhältnis (Signal/ lnterferer-Verhältnis) überschreitet und andererseits die Störungen in den Gleichkanalzellen unschädlich bleiben. Diese Leistungseinstellung wird vorgenommen mittels eines mathematischen Algorithmus in Abhängigkeit von den an den Standorten empfangenen Pegeln von der MS (Mobilstation) und dem von der MS gemessenen Summenpegel und der gemessenen Qualität.

An einer Funkverbindung im Kreuzungsbereich sind demnach die vier nächstgelegenen Standorte zu je etwa einem Viertel der erforderlichen Summenleistung beteiligt. Je weiter sich eine MS von den anderen Standorten entfernt und sich einem Standort nähert, um so größer wird deren relativer Beitrag zu der Verbindung, während die Leistungen der weiter entfernten oder durch Abschattung schlechter empfangbaren Standorte reduziert werden können.

Jeder Standort in der gezeigten Struktur ist mit den beiden genannten entgegengesetzt gerichteten Richtantennen an zwei benachbarten Zellen beteiligt, die definitionsgemäß mit gegeneinander verschiedenen, also disjunkten Frequenzgruppen versorgt werden, die mit f1 und f2 gekennzeichnet sind. Der mit kleinen Kreisen dargestellte Nahbereich (101 - 117) jedes Standortes wird gleichermaßen mit Frequenzen beider benachbarter Zellen versorgt, also sowohl f1 als auch f2. Dies kann, wie oben beschrieben, durch eine rundstrahlende Antenne geschehen. Der gleiche Effekt wird erzielt, wenn für jede der benachbarten Zellen eine eigene rundstrahlende Antenne verwendet wird. Dies stellt somit den Überlappungsbereich benachbarter Zellen dar, dessen Größe sich durch die Antenne-charakteristik und die abgestrahlte Leistung beeinflußen läßt. Nur in diesen kontrollierten Bereichen findet Handover zwischen Zellen mit Kanalwechsel statt.

Mit dieser neuen Funknetzstruktur lassen sich gegenüber den oben skizzierten Mikrozellen-Konzepten erhebliche Kapazitätsgewinne erzielen. Bei der Versorgung linienförmiger und gekreuzter Verkehrswege dürfte sich in der Regel ein 2-er-Cluster erreichen lassen, wie in Figur 1 gezeigt (in der Praxis können jedoch 3er-Cluster oder auch größere erforderlich sein). Dies bedeutet, daß zusätzlich zur Kapazitätserhöhung durch kleinere Zellflächen eine weitere Steigerung der Kapazität durch häufigere Frequenzwiederholungen gewonnen wird. Außerdem wird eine verbesserte Versorgung und Verbindungsqualität erreicht. Das Handover findet in kontrolliert ausgedehnten Gebieten statt und ist daher weder orts- noch zeitkritisch, wobei vor und nach dem Handover eine gleiche und hohe Qualität herrscht. Dadurch wird zudem die Systemlast vermindert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in der Zeichnung dargestellten räumlichen Ausbildung, werden als erfindungswesentlich beansprucht, soweit sie einzeln oder in Kombination gegenüber dem Stand der Technik neu sind.

Das hier vorgestellte Verfahren läßt sich nicht nur auf Mikrozellenstrukturen in Ballungsgebieten anwenden, sondern in gleicher Weise und mit gleichen Vorteilen auch bei anderen linienförmigen Versorgungsbereichen, wie z. B. Autobahnen, Eisenbahnstrecken und Binnenschiffahrtskanälen.

## Patentansprüche

1. Verfahren zur Funkversorgung einer Verkehrswegestruktur, die aus unter beliebigen Winkeln sich kreuzenden Einzelverkehrswegen besteht, durch ein zellulares Mobilfunksystem, welches eine Anzahl von benachbarten und sich berührenden oder teilweise überlappend angeordneten Funkzellen enthält, wobei im Randbereich jeder Zelle mindestens ein Festsenderstandort (51-67) mit mindestens einer Sektorantenne angeordnet ist, die mindestens einen Teilbereich (1-26) der zu versorgenden Zelle mit Funkfrequenzen einer Kanalgruppe (f1; f2) überstreicht, **dadurch gekennzeichnet, daß** mindestens ein weiterer Festsenderstandort (51-67) im Übergangsbereich zu einer unmittelbar benachbarten Zelle angeordnet ist, und daß an diesem Standort mindestens eine Sektorantenne vorhanden ist, die mit der gleichen Kanalgruppe (f1; f2) und gleichzeitig wie der Festsender der zu versorgenden Zelle selbst diese Funkzelle versorgt.

2. Verfahren nach Anspruch 1, **dadurch gekennzeichnet, daß** an dem weiteren Festsenderstandort mindestens eine zusätzliche annähernd rundstrahlende Antenne vorhanden ist, wobei diese Antenne mit den Kanalgruppen der zu versorgenden Zelle und mindestens einer benachbarten Zelle beaufschlagt wird.

3. Verfahren nach Anspruch 1, **dadurch gekennzeichnet, daß** an dem weiteren Festsenderstandort mindestens genauso viele annähernd rundstrahlende Antennen angeordnet sind, wie benachbarte zu versorgende Zellen vorhanden sind, wobei jede der Antennen mit der Kanalgruppe der von ihr zu versorgenden Zelle beaufschlaqt wird.

4. Verfahren nach einem der Ansprüche 1 bis 3, **dadurch gekennzeichnet, daß** die einer Zelle zugeordneten Sender miteinander synchronisiert sind.

5. Verfahren nach einem der Ansprüche 1 bis **4, dadurch gekennzeichnet, daß** jeder Kanal in jeder Feststation mit einer individuellen, regelbaren Leistung sendet, wobei die jeweilige Leistung einer Feststation auf diesem Kanal in einer bestimmten Relation zum Beitrag der Sendeleistung dieser Feststation am Empfängereingang der Mobilstation eingestellt wird.

6. Verfahren nach einem der Ansprüche 1 bis 4, **dadurch gekennzeichnet, daß** jeder Kanal in jeder Feststation mit einer individuellen, regelbaren Leistung sendet, wobei die jeweilige Leistung einer Feststation auf diesem Kanal in einer bestimmten Relation zu der empfangenen Leistung von der Mobilstation am Empfängereingang dieser Feststation eingestellt wird.

7. Verfahren nach Anspruch 5, **dadurch gekennzeichnet, daß** die Sendeleistungen der Feststationen so eingestellt werden, daß ihre Summenleistung am Empfängereingang der Mobilstation gerade über dem minimal tolerierbaren Signal-Interferenz-Abstand für eine definierte Übertragungsqualität unter Fading liegt.

8. Verfahren nach einem der Ansprüche 1 bis 7, **dadurch gekennzeichnet, daß** die Aussendungen einer Mobilstation von der Feststation der Zelle, in der sich die Mobilstation befindet und von den Feststationen der angrenzenden Zellen empfangen werden, und daß zwischen diesen Feststationen ein Abgleich der Sendeleistungen stattfindet, in der Weise, daß die Feststationen mit einer bestimmten Leistung senden, die der Mobilstation am nächsten liegen, während die Feststationen, die der Mobilstation entfernt sind, mit einem kleineren Teil als der bestimmten Leistung senden oder vollständig abgeschaltet sind.

9. Verfahren nach einem der Ansprüche 1 bis 8, **dadurch gekennzeichnet, daß** die Aussendungen einer Mobilstation von der Feststation der Zelle, in der sich die Mobilstation befindet, und von den Feststationen der angrenzenden Zellen empfangen werden und daß diese empfangenen Signale zur Verbesserung der Qualität einem Diversity-Combining unterzogen werden.

10. Verfahren nach einem der Ansprüche 1 bis 9, **dadurch gekennzeichnet, daß** die Übergabeprozedur (Handover) einer Mobilstation im Verbindungszustand von einem Sektor einer Zelle zu einem benachbarten Sektor dieser Zelle durch eine adaptive Leistungszuweisung der Feststationen, welche die Zelle ausleuchten, erfolgt.

11. Verfahren nach einem der Ansprüche 1 bis 9, **dadurch gekennzeichnet, daß** die Übergabeprozedur (Handover) einer Mobilstation im Verbindungszustand von einer Zelle zu einer benachbarten Zelle durch einen Kanalwechsel derart erfolgt, daß immer nur eine der Feststationen beteiligt ist, wobei die Übergabeprozedur in einem örtlichen Gebiet geschieht, welches überwiegend von der bzw. den annähernd rundstrahlenden Antennen ausgeleuchtet wird.

12. Vorrichtung zur Funkversorgung einer Verkehrswegestruktur, die aus unter beliebigem Winkel sich kreuzenden Einzelverkehrswegen besteht, durch ein zellulares Mobilfunksystem, welches eine Anzahl von benachbarten und sich berührenden oder teilweise überlappend angeordneten Funkzellen enthält, wobei im Randbereich jeder Zelle mindestens ein Festsenderstandort (51-67) mit mindestens einer Sektorantenne angeordnet ist, die mindestens einen Teilbereich dieser zu versorgenden Zelle mit Funkfrequenzen einer Kanalgruppe überstreicht, **dadurch gekennzeichnet, daß** mindestens ein weiterer Festsenderstandort (51-67) im Übergangsbereich zu einer unmittelbar benachbarten Zelle angeordnet ist, und daß an diesem Standort mehrere Sektorantennen vorhanden sind, wobei jede Sektorantenne in Richtung auf das Zentrum der jeweils zu versorgenden Zelle zeigt und mit der gleichen Kanalgruppe wie der Festsender der zu versorgenden Zelle selbst diese Zelle funkmäßig versorgt, daß zwei oder mehrere Festsender einer Zelle gleichzeitig senden und daß die Zellen in einer linienförmigen Verkehrswegestruktur eine sternförmige Struktur aufweisen, die sich aus gegenseitig überlappenden, ellipsenförmigen Teilflächen (1-26) zusammensetzt.

13. Vorrichtung nach Anspruch 12, **dadurch gekennzeichnet, daß** die Sendeleistung jedes Kanals in jeder Feststation regelbar ist in Abhängigkeit von der empfangenen Leistung von der Mobilstation am Empfängereingang dieser Feststation und bezogen auf die jeweilige Sendeleistung dieser Mobilstation eingestellt wird.

14. Vorrichtung nach einem der Ansprüche 12 oder 13, **dadurch gekennzeichnet, daß** jede Feststation nur mit einem Bruchteil der Leistung sendet, die notwendig wäre, die gesamte Zelle mit Sendeleistung zu versorgen.

15. Verfahren zur Funkversorgung einer Verkehrswegestruktur, die aus unter beliebigem Winkel sich kreuzenden Einzelverkehrswegen besteht, durch ein zellulares Mobilfunksystem, welches eine Anzahl von benachbarten und sich berührenden oder sich teilweise überlappend angeordneten Funkzellen enthält, wobei jede Funkzelle mit Funkfrequenzen einer Kanalgruppe versorgt wird, **dadurch gekennzeichnet, daß** zur Funkversorgung der Verkehrswegestruktur die Funkzellen so angeordnet werden, daß sie jeweils Teile der Verkehrswegestruktur funkversorgungsmäßig so beleuchten, daß sich als jeweilig beleuchtete Fläche eine n-strahlige Unterstruktur (1-26) so herausbildet, daß sich der Kreuzungspunkt mindestens zweier Einzelverkehrswege der Verkehrswegestruktur innerhalb einer Funkzelle befindet, und daß zwei oder mehrere Festsender einer Zelle gleichzeitig senden.

## Claims

1. A method for the radio supply of a traffic route structure which consists of individual traffic routes intersecting at any desired angle, by a cellular mobile radio system which contains a number of radio cells which are adjacent and touching each other or arranged partially overlapping, in which at least one fixed transmitter station (51-67) is located in the marginal area of each cell with at least one sector antenna which sweeps at least a partial zone (1-26) of the cell which is to be supplied, with radio frequencies of a channel group (f1; f2), **characterised in that** at least one further fixed transmitter station (51-67) is located in the area of transition to an immediately adjacent cell and **in that** at this station at least one sector antenna is present which supplies this radio cell with the same channel group (f1; f2) as, and at the same time as, the fixed transmitter proper to the cell which is to be supplied.

2. A method according to Claim **1, characterised in that** at least one additional, approximately omnidirectional antenna fed with the channel groups of the cell to be supplied and of at least one adjacent cell is present at the further fixed transmitter station.

3. A method according to Claim 1, **characterised in that** at least as many approximately omnidirectional antennae as there are adjacent cells to be supplied, each of the antennae being fed with the channel group of the cell to be supplied by it, are located at the further fixed transmitter station.

4. A method according to one of Claims 1 to **3, characterised in that** the transmitters associated with a cell are synchronised with each other.

5. A method according to one of Claims 1 to **4, characterised in that** each channel in each fixed station transmits with an individual power which can be regulated, the power of each fixed station on this channel being set in a specific relation to the contribution of the transmission power of this fixed station at the receiver input of the mobile station.

6. A method according to one of Claims 1 to **4, characterised in that** each channel in each fixed station transmits with an individual power which can be regulated, the power of each fixed station on this channel being set in a specific relation to the received power of the mobile station at the receiver input of this fixed station.

7. A method according to Claim **5, characterised in that** the transmission powers of the fixed stations are set so that their total power at the receiver input of the mobile station lies just above the minimum tolerable signal-interference interval for a defined transmission quality with fading.

8. A method according to one of Claims 1 to 7, **characterised in that** the transmissions of a mobile station are received by the fixed station of the cell in which the mobile station is situated and by the fixed stations of the adjoining cells and **in that** a balancing of transmission powers takes place among these fixed stations such that the fixed stations which are closest to the mobile station transmit with a specific power, whilst the fixed stations which are remote from the mobile station transmit with a smaller portion than the specific power or are switched off entirely.

9. A method according to one of Claims 1 to 8, **characterised in that** the transmissions of a mobile station are received by the fixed station of the cell in which the mobile station is situated and by the fixed stations of the adjoining cells and **in that** these received signals undergo diversity combining to improve their quality.

10. A method according to one of Claims 1 to 9, **characterised in that** handover of a mobile station in the connected state from one sector of the cell to an adjacent sector of this cell is effected through an adaptive power allocation to the fixed stations covering the cell.

11. A method according to one of Claims 1 to 9, **characterised in that** handover of a mobile station in the connected state from one cell to an adjacent cell is effected by a change of channel, such that only one of the fixed stations is involved at any given time, the handover taking place in a local area which is predominantly covered by the approximately omnidirectional antenna(e).

12. A device for the radio supply of a traffic route structure which consists of individual traffic routes intersecting at any desired angle, by a cellular mobile radio system which contains a number of radio cells which are adjacent and touching each other or arranged partially overlapping, in which at least one fixed transmitter station (51-67) is located in the marginal area of each cell with at least one sector antenna which sweeps at least a partial zone of this cell which is to be supplied, with radio frequencies of a channel group, **characterised in that** at least one further fixed transmitter station (51-67) is located in the area of transition to an immediately adjacent cell and **in that** a plurality of sector antennae are present at this station, each sector antenna pointing in the direction of the centre of the individual cell which is to be supplied and supplying this cell with the same radio channel group as the fixed transmitter proper to the cell which is to be supplied, **in that** two or more fixed transmitters transmit to a cell simultaneously and **in that** the cells in a linear traffic route structure have a star-shaped structure which is made up of overlapping elliptical partial areas (1-26).

13. A device according to Claim 12, **characterised in that** the transmission power of each channel in each fixed station is adjustable as a function of the received power of the mobile station at the receiver input of this fixed station and is adjusted in relation to the respective transmission power of this mobile station.

14. A device according to one of Claims 12 or 13, **characterised in that** each fixed station transmits with only a fraction of the power which would be necessary to supply the entire cell with transmission power.

15. A method for the radio supply of a traffic route structure which consists of individual traffic routes intersecting at any desired angle, by a cellular mobile radio system which contains a number of radio cells, adjacent and touching each other or arranged partially overlapping, each radio cell being supplied with radio frequencies of a channel group, **characterised in that** for the radio supply of the traffic route structure, the radio cells are arranged so that they each provide radio coverage to parts of the traffic route structure so that each area of coverage is formed as an n-radiate substructure (1-26) such that the point of intersection of at least two individual traffic routes of the traffic route structure is situated within a radio cell, and **in that** two or more fixed transmitters of a cell transmit simultaneously.

## Revendications

1. Procédé pour l'alimentation radio d'une structure de voirie qui est composée de voies de circulation individuelles se croisant suivant n'importe quel angle, grâce à un système de mobilophone cellulaire comprenant un certain nombre de cellules radio voisines et se touchant ou se chevauchant partiellement, selon lequel on dispose dans la zone du bord de chaque cellule au moins un emplacement d'émetteur fixe (51-67) pourvu d'au moins une antenne en forme de secteur qui balaie au moins une zone partielle (1-26) de cette cellule à alimenter, avec des radiofréqtiences d'un groupe de canaux (f1 ; f2), **caractérisé** en ce -qu'au moins un autre emplacement d'émetteur fixe (51-67) est disposé dans la zone de transition avec une cellule directement voisine, et en ce qu'il est prévu à cet emplacement au moins une antenne en forme de secteur qui, avec le même groupe de canaux (f1 ; f2) et en même temps que l'émetteur fixe de la cellule à alimenter, alimente cette cellule radio.

2. Procédé selon la revendication 1, **caractérisé en ce qu'**il est prévu à l'autre emplacement d'émetteur fixe au moins une antenne supplémentaire à peu près omnidirectionnelle qui est sollicitée à l'aide des groupes de canaux de la cellule à alimenter et d'au moins une cellule voisine.

3. Procédé selon la revendication 1, **caractérisé en ce qu'**il est prévu à l'autre emplacement d'émetteur fixe au moins exactement autant d'antennes à peu près omnidirectionnelles qu'il y a de cellules voisines à alimenter, chacune des antennes étant sollicitée à l'aide du groupe de canaux de la cellule qu'elle doit alimenter.

4. Procédé selon l'une des revendications 1 à 3, **caractérisé en ce que** les émetteurs associés à une cellule sont synchronisés.

5. Procédé selon l'une des revendications 1 à 4, **caractérisé en ce que** chaque canal émet dans chaque poste fixe avec une puissance individuelle réglable, la puissance d'un poste fixe sur ce canal étant réglée suivant une relation définie avec la contribution de la puissance d'émission de ce poste fixe à l'entrée du récepteur du poste mobile.

6. Procédé selon l'une des revendications 1 à 4, **caractérisé en ce que** chaque canal émet dans chaque poste fixe avec une puissance individuelle réglable, la puissance d'un poste fixe sur ce canal étant réglée suivant une relation définie avec la puissance reçue du poste mobile à l'entrée du récepteur de ce poste fixe.

7. Procédé selon la revendication 5, **caractérisé en ce que** les puissances d'émission des postes fixes sont réglées pour que leur puissance cumulée à l'entrée du récepteur du poste mobile soit juste supérieure à l'écart signal-interférence minimum tolérable pour une qualité de transmission définie avec du fading.

8. Procédé selon l'une des revendications 1 à 7, **caractérisé en ce que** les émissions d'un poste mobile sont reçues par le poste fixe de la cellule dans laquelle se trouve le poste mobile et par les postes fixes des cellules contiguës, et **en ce qu'**un alignement des puissances d'émission a lieu entre ces postes fixes de telle sorte que les postes fixes qui sont les plus proches du poste mobile émettent avec une puissance définie tandis que les postes fixes qui sont éloignés du poste mobile émettent avec une part inférieure à la puissance définie ou sont complètement mis hors circuit.

9. Procédé selon l'une des revendications 1 à 8, **caractérisé en ce que** les émissions d'un poste mobile sont reçues par le poste fixe de la cellule dans laquelle se trouve le poste mobile et par les postes fixes des cellules contiguës, et **en ce que** ces signaux reçus sont soumis, pour une meilleure qualité, à une sélection de diversité.

10. Procédé selon l'une des revendications 1 à 9, **caractérisé en ce que** la procédure de transfert d'un poste mobile à l'état de communication d'un secteur d'une cellule à un secteur voisin situé dans cette cellule se fait grâce à une attribution de puissance adaptative des postes fixes qui couvrent la cellule.

11. Procédé selon l'une des revendications 1 à 9, **caractérisé en ce que** la procédure de transfert d'un poste mobile à l'état de communication d'une cellule à une cellule voisine se fait grâce à un changement de canal de telle sorte qu'il y a toujours un seul poste fixe qui est concerné, étant précisé que la procédure de transfert a lieu dans une zone géographique qui est couverte principalement par l'antenne ou par les antennes à peu près omnidirectionnelles.

12. Dispositif pour l'alimentation radio d'une structure de voirie qui est composée de voies de circulation individuelles se croisant suivant n'importe quel angle, grâce à un système de mobilophone cellulaire comprenant un certain nombre de cellules radio voisines et se touchant ou se chevauchant partiellement, étant précisé que dans la zone du bord de chaque cellule est disposé au moins un emplacement d'émetteur fixe (51-67) pourvu d'au moins une antenne en forme de secteur qui balaie au moins une zone partielle de cette cellule à alimenter, avec des radiofréquences d'un groupe de canaux, **caractérisé en ce qu'**au moins un autre emplacement d'émetteur fixe (51-67) est disposé dans la zone de transition avec une cellule directement voisine, et **en ce qu'**il est prévu à cet emplacement plusieurs antennes en forme de secteurs, étant précisé que chaque antenne en forme de secteur est orientée vers le centre de la cellule à alimenter et fournit, avec le même groupe de canaux que l'émetteur fixe de la cellule à alimenter, l'alimentation radio de cette cellule, **en ce que** deux émetteurs fixes, ou plus, d'une cellule, émettent en même temps, et **en ce que** les cellules ont dans une structure de voirie linéaire une forme en étoile qui se compose de surfaces partielles ellipsoïdales (1-26) qui se chevauchent mutuellement.

13. Dispositif selon la revendication 12, **caractérisé en ce que** la puissance d'émission de chaque canal est réglable dans chaque poste fixe en fonction de la puissance reçue du poste mobile, à l'entrée du récepteur de ce poste fixe, et est réglée par rapport à la puissance d'émission de ce poste mobile.

14. Dispositif selon la revendication 12 ou 13, **caractérisé en ce que** chaque poste fixe n'émet qu'avec une fraction de la puissance d'émission qui serait nécessaire pour alimenter toute la cellule avec la puissance d'émission.

15. Procédé pour l'alimentation radio d'une structure de voirie qui est composée de voies de circulation individuelles se croisant suivant n'importe quel angle, grâce à un système de mobilophone cellulaire comprenant un certain nombre de cellules radio voisines et se touchant ou se chevauchant partiellement, selon lequel chaque cellule radio est alimentée avec des fréquences radio d'un groupe de canaux, **caractérisé en ce que** pour l'alimentation radio de la structure de voirie, les cellules radio sont disposées de manière à couvrir, en matière d'alimentation radio, des parties de ladite structure de voirie pour qu'il se forme comme surface couverte une infrastructure à n faisceaux (1-26) telle que le croisement d'au moins deux voies de circulation individuelles de la structure de voirie se trouve à l'intérieur d'une cellule radio, et que deux émetteurs fixes ou plus émettent en même temps.
